Europäisches Patentamt

European Patent Office

Office européen des brevets

(11) Veröffentlichungsnummer: **0 455 217 A2**

# EUROPÄISCHE PATENTANMELDUNG

(21) Anmeldenummer: **91107010.0**

(51) Int. Cl.⁵: **B29D 30/06**

(22) Anmeldetag: **30.04.91**

(30) Priorität: **04.05.90 DE 9005098 U**

(43) Veröffentlichungstag der Anmeldung:
**06.11.91 Patentblatt 91/45**

(84) Benannte Vertragsstaaten:
**DE ES FR GB IT**

(71) Anmelder: **STAHLGRUBER Otto Gruber GmbH & Co.**
**Einsteinstrasse 130**
**W-8000 München 80(DE)**

(72) Erfinder: **Scheurer, Hans**
**Balanstrasse 34**
**W-8000 München 80(DE)**

(74) Vertreter: **Patentanwälte Beetz sen. - Beetz jun. Timpe - Siegfried - Schmitt-Fumian- Mayr**
**Steinsdorfstrasse 10**
**W-8000 München 22(DE)**

(54) **Vorrichtung zum Vulkanisieren der Wulstzonen eines Luftreifens.**

(57) Gegenstand der Erfindung ist eine Vorrichtung zum Vulkanisieren der Wulstzonen eines Luftreifens, die eine an einem Ende eines Tragelements (1) angeordnete elektrisch beheizbare Preßzange aufweist, deren Backen (18, 23) die zu vulkanisierende Wulststelle (8) umgreifen. Am anderen Ende des Tragelements (1) ist ein Gegenhalter (7) ausfahrbar angeordnet, der sich an der diametral gegenüberlie-genden Wulststelle abstützt. Um die Vulkanisations-arbeiten ohne weitere Hilfsmittel, wie Auflage- oder Stützkonsolen, schnell und einfach ausführen zu können, ist die Vorrichtung als Handgerät ausgebil-det und weist einen Trage- und Manipulationsgriff (25) sowie mindestens einen Stellantrieb (2; 9) zum Betätigen der Zange (18, 23) und des Gegenhalters (7) auf.

EP 0 455 217 A2

Die Erfindung betrifft eine Vorrichtung zum Vulkanisieren der Wulstzonen eines Luftreifens, bestehend aus einem mittleren Tragelement, einer an einem Ende des Tragelements angeordneten elektrisch beheizbaren Zange, deren Backen die zu vulkanisierende Wulststelle umgreifen, einem am anderen Ende des Tragelements ausfahrbar angeordneten Gegenhalter, der sich an der diametral gegenüberliegenden Wulststelle abstützt, und Mittel zum Betätigen der Zange und zum Ausfahren des Gegenhalters.

In einem Prospekt "BEAD REPAIR PRESS" der Firma MOHAWK RUBBER SALES INC. ist eine derartige Vorrichtung beschrieben, bei der ein plattenförmiges Tragelement auf einem auf dem Fußboden verankerten Ständer montiert ist. Auf diesem Tragelement ist ein schieberartiger Gegenhalter geführt, der mittels eines Handhebels über ein Gelenkgestänge verschoben werden kann und der sich mit seiner entsprechend profilierten Vorderfläche an einem Abschnitt des Reifenwulstes abstützt, welcher der zu reparierenden Wulststelle diametral gegenüberliegt. Am anderen Ende des plattenförmigen Tragelements befindet sich eine Zange, in deren Backen elektrische Heizelemente eingebaut sind. Diese Zange kann mittels eines zweiten Handhebels über ein weiteres Gelenkhebelgestänge geschlossen bzw. geöffnet werden, wobei ihre beiden Backen die zu reparierende Wulststelle umschließen und auf diese während des Vulkaniservorganges einen bestimmten Druck ausüben. Die Heizpatronen in den Backen sind über einen Thermostaten an ein Steckerkabel angeschlossen. Diese ortsfest montierte Vorrichtung wird zur Reparatur von Luftreifen eingesetzt, die Beschädigungen im Wulstbereich aufweisen, wie sie z. B. beim unsachgemäßen Montieren der Reifen auf Felgen, beim Auffahren auf Bordsteinkanten od. dgl. vorkommen. Vor dem Vulkanisationsvorgang werden die beschädigten Stellen aufgerauht und die Verletzungstrichter mit geeignetem Vulkanisiermaterial mit geringfügiger Überhöhung ausgefüllt. Danach wird der Luftreifen so auf das plattenförmige Tragelement aufgelegt, daß die zu reparierende Wulststelle sich zwischen den Backen befindet. Durch Betätigen des entsprechenden Handhebels wird anschließend der Gegenhalter verschoben, so daß seine profilierte Stirnfläche gegen den der zu reparierenden Wulststelle diametral gegenüberliegenden Wulstabschnitt drückt, wodurch die zu reparierende Wulststelle fest zwischen die Backen gezogen wird. Daraufhin wird der zweite Handhebel betätigt, um die Zangenbacken zu schließen und einen möglichst hohen Druck auf die zu vulkanisierende Wulststelle auszuüben. Zuvor wurden die in die Heizbacken eingebauten Heizpatronen aktiviert, so daß die Backen an ihrer wirksamen Außenseite eine Temperatur von ca. 150° haben. Nach Abschluß des längeren Vulkanisationsvorganges werden die beiden Handhebel in Gegenrichtung betätigt und der Reifen wird von Hand aus der Vorrichtung herausgenommen. Insbesondere bei Großreifen ergeben sich in der Praxis wegen der Abmessungen und insbesondere der hohen Gewichte dieser Reifen Schwierigkeiten beim Anheben und Einsetzen in die Vorrichtung. Darüber hinaus ist aufgrund der Handhebelbetätigung insbesondere der Zangenbacken nicht sichergestellt, daß der für eine optimale Vulkanisation notwendige Preßdruck auch erreicht worden ist.

Aufgabe der Erfindung ist es, eine Vorrichtung zum Vulkanisieren der beschädigten Wulstzonen eines Luftreifens zu schaffen, die ortsunabhängig eingesetzt werden kann und stets optimale Vulkanisierbedingungen gewährleistet.

Diese Aufgabe wird erfindungsgemäß dadurch gelöst, daß die Vorrichtung als Handgerät ausgebildet ist und mindestens einen Trage- bzw. Manipulationsgriff sowie mindestens einen Stellantrieb zum Betätigen der Zange und des Gegenhalters aufweist.

Durch die Verwendung mindestens eines Druckmittelzylinders als Stellantrieb zum Ausfahren des Gegenhalters wird erreicht, daß die von Hand in einen z. B. auf einem Tisch oder auf dem Boden liegenden Reifen positionierte Vorrichtung schnell und genau in der vorgesehenen Vulkanisierposition fixiert wird. Der zweckmäßig gleichzeitig ablaufende Schließvorgang der Zangenbacken um die zu vulkanisierende Wulststelle erfolgt mit stets gleichbleibender Kraft, die von einem gemeinsamen oder auch von einem separaten Druckmittelzylinder erzeugt wird.

Durch die gemäß einer zweckmäßigen Ausgestaltung der Erfindung schwenkbare Anordnung der Unterbacke wird einmal eine günstige Verteilung der Preßkräfte über den gesamten zu vulkanisierenden Wulstabschnitt erreicht sowie zum anderen das korrekte Einlegen dieses vorpräparierten Abschnittes in die Zange erleichtert.

Eine besonders einfache und schnelle Handhabung der Vorrichtung beim Einspannen und Klemmen ergibt sich durch Verwendung eines gemeinsamen Handsteuerventils, das die gleichzeitige Druckmittelzufuhr zu den Druckmittelzylindern steuert, wenn für den Gegenhalter und die Zange je ein gesonderter Druckmittelzylinder eingesetzt werden.

Um unterschiedliche Reifentypen reparieren zu können, ist der Gegenhalter über eine verlängerbare Stange mit dem gleichachsig angeordneten Druckmittelzylinder verbunden. Ferner können die Backen der Zange und auch des Gegenhalters auswechselbare Futter zur Anpassung an verschiedene Wulstformen und -größen aufweisen.

Die Umsetzung der Ausfahrbewegung eines der Druckmittelzylinder in die Schließbewegung der Zangenbacken erfolgt zweckmäßigerweise über ein Hebelgestänge, das an der schwenkbaren Backe angreift und eine Kraftübersetzung bewirkt.

Eine weitere zweckmäßige Ausgestaltung der Erfindung zeichnet sich noch dadurch aus, daß die beiden Backen der Zange zusätzlich zur Schwenkbewegung gegeneinander translatorisch verschoben werden können, um die Maulweite zu vergrößern und damit das Einlegen des Reifenwulstes zu erleichtern.

Eine konstruktiv einfache und leichtgewichtige Ausführung der erfindungsgemäßen Vorrichtung zeichnet sich noch dadurch aus, daß nur ein einziger Druckmittelzylinder zum Ausfahren des Gegenhalters und zum Betätigen der Zangenbacken vorgesehen ist. In diesem Fall ist das Zylindergehäuse des Druckmittelzylinders am Tragelement längsverschiebbar angeordnet und über ein geeignetes Schwenkhebelgestänge mit der schwenkbar gelagerten Backe verbunden. Durch Einleiten eines Druckmittels in den Zylinder erfolgt gleichzeitig eine Ausfahrbewegung der Kolbenstange mit dem Gegenhalter sowie eine Gegenbewegung des Zylindergehäuses, wobei letztere über das Hebelgestänge ein Schließen der Zangenbacken herbeiführt.

Eine weitere Ausführungsmöglichkeit der erfindungsgemäßen Vorrichtung besteht darin, daß die Vorrichtung eine hydraulische Handpumpe enthält, die an einen oder beide Druckmittelzylinder angeschlossen ist und diese durch Betätigen mittels eines Handhebels mit Drucköl beaufschlagt.

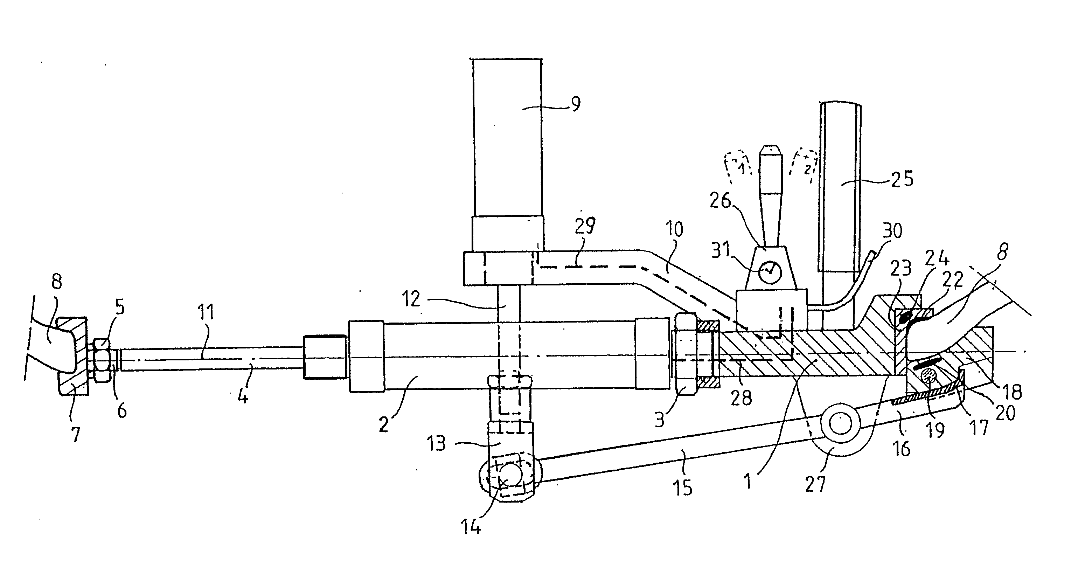

Weitere Vorteile und Besonderheiten der erfindungsgemäßen Vorrichtung sind bei dem in der Zeichnung dargestellten Handgerät verwirklicht, das im folgenden ausführlich beschrieben wird.

Das dargestellte Handgerät besteht aus einem plattenförmigen Tragelement 1, an dessen linkem Ende ein Druckluftzylinder 2 durch eine Schraubverbindung 3 fest montiert ist. Die Kolbenstange 4 des Druckluftzylinders 2 trägt an ihrem Ende einen Gewindeabschnitt 5, auf den über ein Zwischenstück 6 ein Gegenhalter 7 aufgeschraubt wird, dessen Maul der Form eines Reifenwulstes 8 angepaßt ist.

Ein weiterer Druckluftzylinder 9 ist über einen abgewinkelten Tragarm 10 am Tragelement 1 befestigt, wobei die Längsachse dieses Druckluftzylinders 9 seitlich versetzt und senkrecht zur Längsachse 11 der Vorrichtung verläuft. Die Kolbenstange 12 des Druckmittelzylinders 9 ist über ein Zwischenstück 13 mit Einstellgewinde und ein Gelenk 14 mit dem Ende eines Doppelhebels 15 gelenkig verbunden, dessen freier Arm 16 über eine Spreizfeder 17 an einer Unterbacke 18 angreift, die um einen Bolzen 19 verschwenkbar am Tragelement gelagert ist. In diese schwenkbare Backe 18 einer Preß- bzw. Klemmzange ist ein Heizelement 20 eingebaut, das über nicht dargestellte elektrische Leitungen mit einer Stromversorgung über einen Thermostaten verbunden ist. Die Backe 18 greift an der in der Zeichnung dargestellten Betriebsstellung an der Unterseite des Reifenwulstes 8 an, der bei 22 die zu vulkanisierende Stelle aufweist. In einer Zeitschaltuhr 31 kann die jeweils günstigste Vulkanisationszeit eingestellt werden, nach deren Ablauf die Stromzufuhr zu den in der Backe 18 und einer Gegenbacke 22 auswechselbar eingebauten Heizelementen 20 und 24 unterbrochen und gegebenenfalls auch der auf die Unterbacke 18 einwirkende Druckluftzylinder 9 entlüftet wird.

Bei der dargestellten Ausführung ist das Ende des Tragelements verbreitert und weist in einem Ausschnitt ein Futter 23 auf, das eine ortsfeste Gegenbacke mit eingebautem Heizelement 24 bildet.

Auf der Oberseite des Tragelements sind ferner ein Handgriff 25 sowie ein Handschaltventil 26 sowie an der Unterseite ein Lagerbock 27 für den Doppelhebel 15, 16 fest montiert. Der Handgriff 25 dient zum Tragen und Plazieren des relativ leichtgewichtigen Handgerätes in den Innenraum eines Luftreifens in der Höhe des zu reparierenden Wulstes. Durch Verstellen des Handsteuerventils 26 werden die beiden Druckluftzylinder 2 und 9 gleichzeitig über die gestrichelt dargestellten Druckluftleitungen 28, 29 mit Druckluft beaufschlagt bzw. entlüftet, wobei die Druckluft über einen Schlauch 30 von einer äußeren Versorgung zum Ventil geführt wird.

Die Erfindung ist nicht auf die dargestellte und vorstehend beschriebene Ausführungsform beschränkt. Vielmehr kann auch nur ein einziger Druckluftzylinder verwendet werden, dessen Zylindergehäuse axial verschiebbar am Tragelement 1 montiert und über ein geeignetes Hebelgestänge mit der schwenkbaren Backe 18 verbunden ist. Andererseits besteht auch die Möglichkeit, statt der Druckluftzylinder einen oder zwei Hydraulikzylinder einzusetzen, die an eine integrierte Handpumpe mit einem entsprechenden Flüssigkeitsreservoir angeschlossen sind. Durch Betätigen der Handpumpe mittels eines Handhebels werden die Hydraulikzylinder mit Drucköl beaufschlagt und mittels eines Handsteuerventils entlastet. Für besondere Anwendungsfälle, z. B. für kleinere Reifengrößen, kann auch eine vereinfachte Vulkanisiervorrichtung geeignet sein, die statt der Druckmittelzylinder von Hand verschwenkbare Hebel zur Erzeugung der Einspannkräfte für den Gegenhalter und die Zange aufweist, die am Tragelement angelenkt und über eine sog. Ratsche bzw. ein Gelenkhebelgestänge mit Untersetzung und Kraftbegrenzung jeweils mit dem Gegenhalter bzw. der beweglichen Backe der Zange verbunden sind. Für diese Geräte entfällt eine äußere Druckmittelversorgung.

**Patentansprüche**

1. Vorrichtung zum Vulkanisieren der Wulstzonen eines Luftreifens, bestehend aus

    einer an einem Ende eines Tragelements angeordneten elektrisch beheizbaren Preßzange, deren Backen die zu vulkanisierende Wulststelle umgreifen,

    einem am anderen Ende des Tragelements ausfahrbar angeordneten Gegenhalter, der sich an der diametral gegenüberliegenden Wulststelle abstützt, und

    Mittel zum Betätigen der Zange und des Gegenhalters,

    **dadurch gekennzeichnet,**

    daß die Vorrichtung als Handgerät ausgebildet ist und einen Trage- und Manipulationsgriff (25) sowie mindestens einen Stellantrieb (2; 9) zum Betätigen der Zange (18, 23) und des Gegenhalters (7) aufweist.

2. Vorrichtung nach Anspruch 1,
    dadurch gekennzeichnet,
    daß eine Backe (18) der Zange (18, 23) schwenkbar am Tragelement (1) angelenkt ist.

3. Vorrichtung nach Anspruch 1 oder 2,
    dadurch gekennzeichnet,
    daß die Stellantriebe zur Betätigung der Zange (18, 23) und zum Ausfahren des Gegenhalters (7) Druckmittelzylinder (2, 9) sind, die über ein gemeinsames Handsteuerventil (26) mit vorzugsweise mehreren Schaltstellungen an eine Druckmittelversorgung (29) angeschlossen sind.

4. Vorrichtung nach einem der Ansprüche 1 bis 3,
    dadurch gekennzeichnet,
    daß der Gegenhalter (7) über eine verlängerbare Stange (11) mit dem gleichachsig angeordneten Druckmittelzylinder (2) verbunden ist.

5. Vorrichtung nach einem der Ansprüche 1 bis 4,
    dadurch gekennzeichnet,
    daß die Backen (18, 23) der Zange und gegebenenfalls der Gegenhalter auswechselbare Futter (22) zur Anpassung an verschiedene Wulstformen und -größen aufweisen.

6. Vorrichtung nach einem der Ansprüche 1 bis 5,
    dadurch gekennzeichnet,
    daß der Druckmittelzylinder (9) über ein Hebelgestänge (13 bis 16) und eine Spreizfeder (17) an der beweglichen Zangenbacke (18) angreift.

7. Vorrichtung nach Anspruch 1 oder 2,
    dadurch gekennzeichnet,
    daß das längsverschiebbar am Tragelement (1) montierte Zylindergehäuse des Druckmittelzylinders über ein Gelenkhebelgestänge mit den beweglichen Backen der Zange und seine Kolbenstange mit dem Gegenhalter verbunden sind.

8. Vorrichtung nach Anspruch 1 oder 2,
    dadurch gekennzeichnet,
    daß der Druckmittelzylinder mit einer hydraulischen Handpumpe gekoppelt ist.

9. Vorrichtung nach Anspruch 1 oder 2,
    dadurch gekennzeichnet,
    daß der Stellantrieb für den Gegenhalter (7) und der Stellantrieb zur Erzeugung der Schließkraft der schwenkbaren Backe (18) je einen manuell bewegbaren Schwenkhebel aufweisen, die über eine Untersetzung mechanisch mit dem Gegenhalter (7) bzw. der beweglichen Backe (18) verbunden sind.

10. Vorrichtung nach einem der Ansprüche 1 bis 9,
    dadurch gekennzeichnet,
    daß den in den Backen (18, 23) der Zange auswechselbar angeordneten elektrischen Heizelementen (20, 24) eine Schaltuhr (31) zugeordnet ist, die nach Ablauf einer eingestellten Zeitspanne den Heizstrom unterbricht und gegebenenfalls die Druckmittelzylinder entlastet.